# EUROPÄISCHE PATENTSCHRIFT

(11) **EP 0 321 521 B1**
(45) Veröffentlichungstag und Bekanntmachung des Hinweises auf die Patenterteilung: **28.09.1994**
(21) Anmeldenummer: 88905371.6
(22) Anmeldetag: 14.06.1988
(51) Int. Cl.: G02C 13/00, B08B 11/00, B08B 1/00, B08B 3/00

(54) **VORRICHTUNG ZUM REINIGEN VON EMPFINDLICHEN FLÄCHEN, INSBESONDERE OPTISCHEN GLÄSERN**
APPARATUS FOR CLEANING SENSITIVE SURFACES, IN PARTICULAR OF OPTICAL GLASSES
DISPOSITIF DE NETTOYAGE DE SURFACES SENSIBLES, NOTAMMENT DE VERRES OPTIQUES

(30) Priorität: 20.06.1987 DE 3720502
(43) Veröffentlichungstag der Anmeldung: 28.06.1989
(73) Patentinhaber: VICK, Walter, D-26180 Rastede (DE)
(72) Erfinder: VICK, Walter, D-26180 Rastede (DE)
(74) Vertreter: Jabbusch, Wolfgang, Dr.Jur. Jabbusch, Wehser & Lauerwald Patentanwälte
(86) Internationale Anmeldenummer: EP8800524
(87) Internationale Veröffentlichungsnummer: WO8810443

(56) Entgegenhaltungen:
- EP-A- 0 225 776
- DE-A- 3 529 712
- DE-U- 7 106 192
- DE-U- 8 234 202
- GB-A- 2 124 404
- US-A- 2 787 501
- US-A- 3 254 360

## Beschreibung

Die Erfindung betrifft ein Handgerät zum Reinigen einer Oberfläche von optischen Gläsern, wie Brillengläsern oder Objektiven, unter Zuhilfenahme einer Reinigungsflüssigkeit.

Auf dem Gebiet der Reinigungsmethoden für optische Gläser, wie Brillengläser oder Objektive, werden verschiedene Mittel angewendet, die sich jedoch nicht als sehr zweckmäßig erwiesen haben. Dieses trifft insbesondere dann zu, wenn eine Reinigung unterwegs auf Reisen, am Arbeitsplatz oder während einer Freizeitbeschäftigung vorgenommen werden muß.

Nach der Druckschrift DE-U-7 106 192 ist ein Handgerät zum Reinigungen von Brillengläsern und dergleichen in Form einer Sprayflasche für die Reinigungsflüssigkeit bekannt. Der Sprühkopf der Sprayflasche des bekannten Handgeräts weist eine Sprühdüse zum Versprühen der Reinigungsflüssigkeit sowie eine mit einem Wischkopf vergleichbare Sprühkopfstirnfläche auf, indem diese mit einem Schwamm, Leder oder dergleichen Wischmaterial beschichtet ist.

In der Druckschrift GB-A-2 124 404 ist ein Handgerät beschrieben, aus dessen Gehäuse nach Abnehmen einer Verschlußkappe ein mit Reinigungsflüssigkeit vollgesogener, dochtähnlich vorstehender Abschnitt eines saugfähigen Materials vorspringt, mit dem sich die Reinigungsflüssigkeit auf die zu reinigende Oberfläche, z.B. ein Brillenglas, auftragen läßt.

Auf insbesondere Brillengläsern sind häufig schwer zu beseitigende Verschmutzungen, wie z.B. Fingerabdrücke, Hautschweiß, Rauchniederschläge oder gar Kosmetika vorhanden. Versuche haben ergeben, daß die Verunreinigungen zwar durch die speziellen Reinigungsflüssigkeiten angelöst werden. Dies hat zur Folge, daß die angelösten Verunreinigungen von den Wischeinrichtungen der bekannten Handgeräte lediglich verschmiert werden. Folglich sind bei der Verwendung der bekannten Handgeräte herkömmliche Reinigungstücher zur Nachbearbeitung erforderlich, mit dem Nachteil, daß der Reinigungsvorgang unter Zuhilfenahme der ein Reinigungstuch führenden Fingerkuppen vorgenommen werden muß, was einerseits dazu führt, daß die Flächen nicht bis unmittelbar zu einer Rahmeneinfassung, beispielsweise einer Brille, erreichbar sind - es wird, ganz im Gegensatz zu dem Erwünschten, der Schmutz in diese Bereiche hineingerieben - und andererseits durch die Finger eine Verschmutzung des Reinigungstuches selbst erfolgt, mit der Folge, daß nach einigen Reinigungsvorgängen keine ordentliche Funktion desselben mehr gegeben ist.

Der Erfindung liegt die Aufgabe zugrunde, ein Handgerät zu schaffen, das - unter Beibehaltung der an sich wichtigen Mitnahmemöglichkeit in Taschen etc. - die bekannten Komponenten die Reinigungsflüssigkeit einerseits und das Reinigungstuch andererseits, so einsetzbar macht, daß die vorstehend angegebenen Nachteile vermieden werden.

Diese Aufgabe wird durch die in dem Patentanspruch 1 angegebenen Mittel und deren Anordnung gelöst.

Einzelheiten, die den Gegenstand der Erfindung weiterbilden, sind in den Unteransprüchen angegeben.

Durch die erfindungsgemäße Vorrichtung ist ein mitführbares Reinigungsgerät, z.B. für Brillen, geschaffen worden, mit dem erreicht wird, daß die Verunreinigungen unter einem ständigen Nachschub von Reinigungsflüssigkeit und einer gleichzeitigen Wischbewegung gut von den Flächen abgelöst werden können, wobei auch schwer zugängliche Stellen am unmittelbaren Brillenrahmen erreichbar sind. Die Verunreinigungen schwimmen in der Reinigungsflüssigkeit regelrecht auf bzw. werden vollkommen gelöst, weil der Wischkopf hierfür eine ausreichend große Menge derselben auf den Flächen beläßt. Durch den in der Aufnahmevorrichtung vorgesehen Vorrat des Saugtuches, das ohne direkte Zuhilfenahme der Finger nachschiebbar ist, wird gewährleistet, daß stets ein sauberer Abschnitt des Saugtuches zur Verfügung steht, welches nach Gebrauch stückweise abgerissen werden kann.

Desweiteren bietet die erfindungsgemäße Vorrichtung den Vorteil, daß beide Komponenten zur Reinigung, nämlich die Flüssigkeit und das Saugtuch, in einer Handhabe zur Verfügung stehen und durch ein alleiniges Verdrehen derselben um ihre Längsachse entweder die Befeuchtungs- und Wischvorrichtung oder die Reinigungsvorrichtung der zu reinigenden Fläche gegenüberstellbar ist, wobei letztere so aufgelegt wird, daß sich das Saugtuch zwischen der dieser zugeordneten Wischplatte und der Fläche befindet und somit in alle Richtungen verschiebbar ist.

Weitere Vorteile der erfindungsgemäßen Vorrichtung ergeben sich aus der Beschreibung und den Zeichnungen.

Es zeigen:
- Fig. 1: eine Seitenansicht der kompletten Vorrichtung gemäß der Erfindung im Schnitt;
- Fig. 1a: eine Einzelheit;
- Fig. 2: einen Schnitt durch den Wischkopf in starker Vergrößerung;
- Fig. 3: eine Draufsicht der kompletten Vorrichtung als Teilschnitt;
- Fig. 4a und 4b: Querschnitte der kompletten Vorrichtung;
- Fig. 5/6 und 7: je eine Einzelheit.

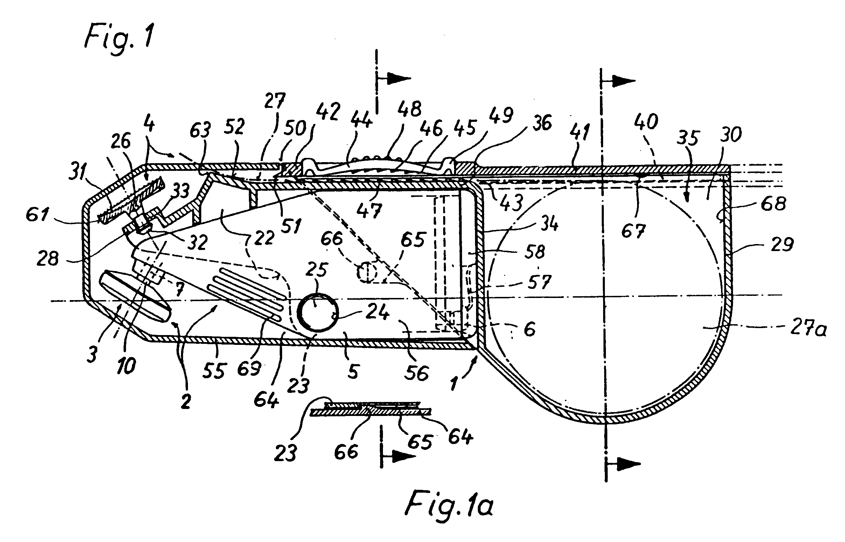

Wie die Figur 1 zeigt, besteht eine Vorrichtung zum Reinigen von empfindlichen Flächen, insbesondere Brillengläsern, aus einer Handhabe, die als eine Aufnahmevorrichtung 1 für eine Befeuchtungs- und Wischvorrichtung 2 und für eine Reinigungsvorrichtung 4 dient. Das Aufnahmeteil 1 ist im wesentlichen als ein langgestrecktes Teil ausgebildet, das, ausgehend von der Darstellung in Fig. 1 in seinem linken Bereich einen Aufnahmeschacht 22 bildet, der ein nach unten offenes U-förmiges Profil bildet. Der Aufnahmeschacht 22 besteht somit im wesentlichen aus einer Basiswand 36, einer Trennwand 34 und zwei freien und somit fedrigen Schenkeln 23.

In den fedrigen Schenkeln 23 des Aufnahmeschachtes 22 sind als runde Durchbrüche ausgebildete Rastmittel 24 vorgesehen, in die entsprechend ausgeformte Gegehrastmittel 25 eingreifen können, die an den Seitenwänden 56 eines als eine kompressierbare Flasche ausgebildeten Flüssigkeitsspenders 5 erhaben angeformt sind.

Der Flüssigkeitsspender 5, der Bestandteil der Befeuchtungs- und Wischvorrichtung 2 ist, weist an seinem rechten Ende einen Nachfüllverschluß 6, der über ein Filmscharnier 57 homogen an ein Deckelteil 58 angeformt ist, und an seinem linken Ende eine schräg nach unten weisende, als ein konisches Durchgangsloch ausgebildete Aufnahme 7 für einen Befestigungszapfen 10 eines Wischkopfes 3 auf.

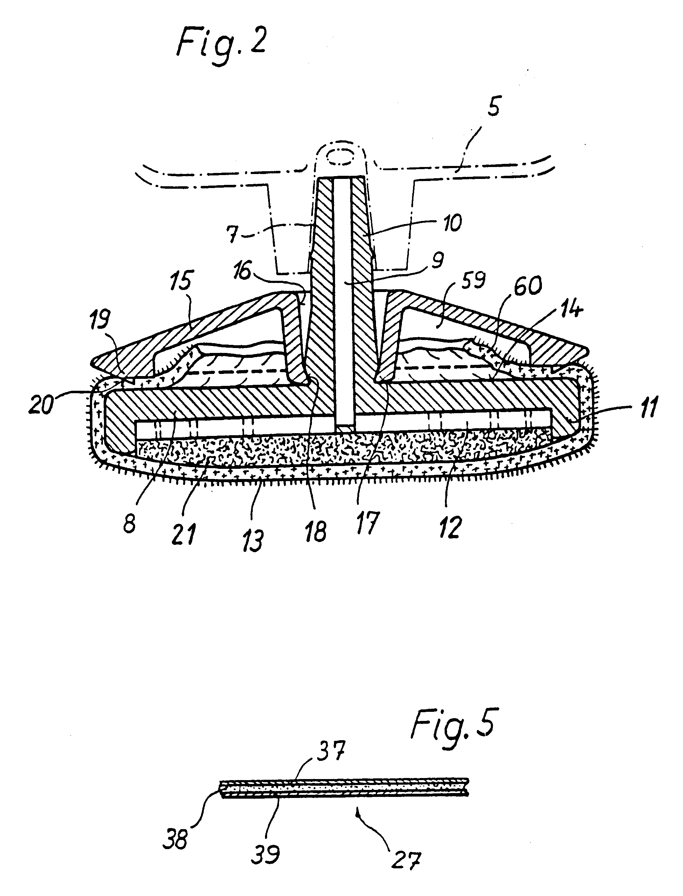

Der Wischkopf 3 besteht aus einem im wesentlichen plattenförmig ausgebildeten Trägerteil 8 (siehe insbesondere Fig. 2), an dem einerseits der mit einem Flüssigkeitskanal 9 durchsetzte konisch ausgebildete Befestigungszapfen 10 und andererseits ein sich axial erstreckender Rand 11 angeformt ist, zwischen dem Verteilungsrinnen 12 für die Reinigungsflüssigkeit vorgesehen sind, die ausgehend von dem Flüssigkeitskanal 9 vorzugsweise strahlenförmig radial nach außen verlaufen. Zwischen dem Rand 11, der in axialer Richtung über die Verteilungsrinnen 12 übersteht, kann eine elastische Platte 21 eingelegt werden, die aus einem zusammendrückbaren und flüssigkeitsdurchlässigen Schwammaterial besteht.

Der Wischkopf 3 wird von einem tränkbaren Wischtuch 13 abgedeckt, das aus einem weichen, bürstenartigen Stoff, zum Beispiel einem Samt besteht, derart, daß mindestens auch dessen radialer Rand 11 bedeckt ist. Hierfür ist das Wischtuch 13 bei dem dargestellten Ausführungsbeispiel derart um das Trägerteil 8 herumgelegt angeordnet, daß es an dessen Rückseite 14 mittels einer Haltevorrichtung 15 festsetzbar ist.

Die Haltevorrichtung 15 besteht aus einer Platte, deren Form dem Trägerteil 8 angepaßt ist, und die mit einem nach oben hin konisch erweiterten Aufnahmeloch 16 für den Befestigungszapfen 10 versehen ist. Die Haltevorrichtung 15, die gegenüber dem Trägerteil 8 aus einem Kunststoff mit wesentlich härterer Konsistenz besteht, weist in ihrem Aufnahmeloch 16 einen Rastrand 17 auf, der in eine Rastnut 18 des Befestigungszapfens 10 rastend eingreifen kann, derart, daß die Haltevorrichtung 15 mit ihrem in Achsrichtung weisenden Außenrand 19 im montierten Zustand auf der Rückseite 14 des Trägerteils 8 vorgespannt aufliegt. An dem Außenrand 19 sind in Achsrichtung weisende Widerhaken 20 angeformt, die in das Wischtuch 13 eingreifen und dieses in der montierten Lage arretieren.

Die Ränder 60 des Wischtuches 13, die im montierten Zustand naturgemäß unförmig zusammengestaucht sind, finden in einem Hohlraum 59 der Haltevorrichtung 15 platz.

Der Befestigungszapfen 10 des Trägerteils 8 ist in der Aufnahme 7 des Flüssigkeitsspenders 5 mittels eines Preßsitzes montiert. Um diesen Sitz sicherer gestalten zu können, ist es ohne weiteres möglich, an dem Befestigungszapfen 10 und/ oder in der Aufnahme 7 Rastnuten (nicht dargestellt) vorzusehen.

Der Flüssigkeitsspender 5 ist zu seinem die Aufnahme 7 für den Wischkopf 3 tragenden Ende hin in seinen Abmessungen derart verjüngt ausgebildet, daß er von dem Wischkopf (3) seitlich überragt wird.

Die Reinigungsvorrichtung 4 besteht einerseits aus einer Wischplatte 26, die an dem einen freien Ende 28 der Aufnahmevorrichtung 1 befestigt ist, und andererseits aus einem Saugtuch 27, das von einer einen Vorrat bildenden Rolle 27a abziehbar ist. Die Wischplatte 26 besteht aus einem elastischen Kunststoff und weist eine im wesentlichen konkav ausgebildete Fläche auf, die mit einer Vielzahl von kleinen Verankerungserhebungen 31 mit kegelartiger Form besetzt ist. Diese Fläche dient zum Andrücken des Saugtuches 27 an die zu reinigende Fläche, wozu das Saugtuch 27 im Funktionszustand zwischen der Wischplatte 26 und der zu reinigenden Fläche eingeschlossen ist. Für den Zweck, daß das Saugtuch 27 sich seitlich an dem Außenrand 61 der Wischplatte 26 hochlegen kann, ist das Saugtuch 27 breiter ausgebildet als der Wischkopf.

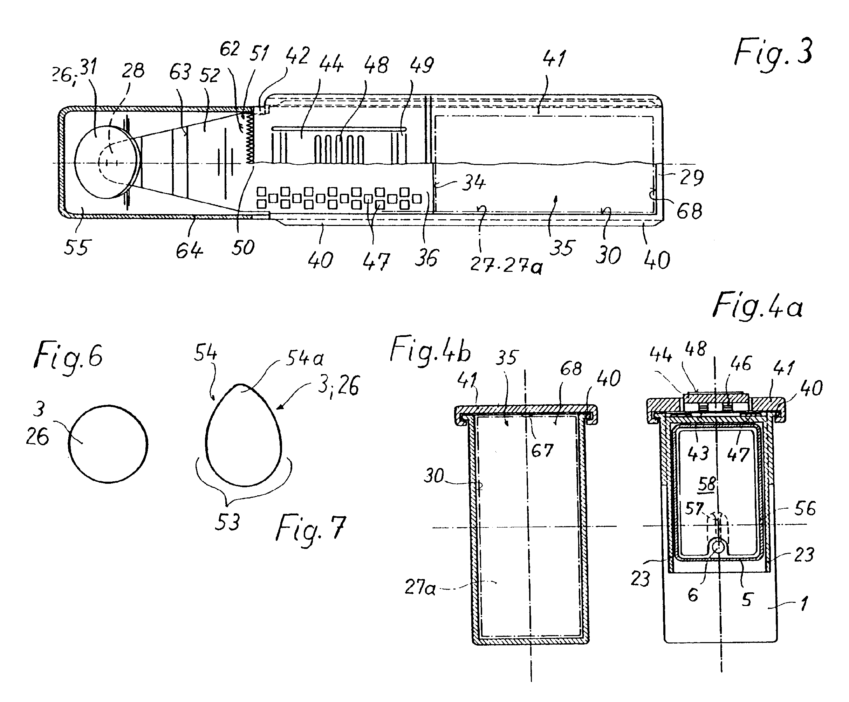

Für eine bewegliche Befestigung der Wischplatte 26 ist dieselbe mit einem elastischen, rastenden Zapfen 32 versehen, der in eine Aufnahmebohrung 33 des freien Endes 28 der Aufnahmevorrichtung 1 eingreift. Das freie Ende 28 ist wesentlich schmaler ausgebildet als die Wischplatte 26 breit ist ( siehe insbesondere Figur 3).

Die Wischplatte 26 und der Wischkopf 3 nehmen an den sie tragenden Teilen (freies Ende 28 der Aufnahmevorrichtung 1 bzw. Flüssigkeitsspender 5) eine solche Lage ein, daß sie stirnseitig in entgegengesetzte Richtungen weisen, eine in die Richtung des freien Endes 28 weisende Schräglage haben und um eine in der Längsrichtung der Aufnahmevorrichtung 1 verlaufende gedachte Linie zueinander eine symmetrische Lage einnehmen.

Die den Vorrat des Saugtuches 27 bildende Rolle 27a ist in einem Einlegeschacht 30 der Aufnahmevorrichtung 1 untergebracht, der sich im Bereich des dem freien Ende 28 gegenüberliegenden Endes 29 befindet. Dieser Einlegeschacht 30 schließt sich hinter der Trennwand- 34 an den Aufnahmeschacht 22 an und weist eine im wesentlichen in die entgegengesetzte Richtung weisende Öffnung 35 auf. Hierdurch kann das streifenförmige Saugtuch 27 von der Rolle 27a her über die Basiswand 36 des Aufnahmeschachtes 22 hinweg in den Bereich der Wischplatte 26 geführt werden.

Das Saugtuch 27 besteht vorzugsweise aus mehreren Papierschichten (siehe Figur 5), wobei die erste Schicht 37, die der zu reinigenden Fläche gegenüberliegt, ein optisches Papier ist, die zweite und dritte Schicht 38 bzw. 39 verstärkt saugfähig sind und die dritte Schicht 39 gegenüber der zweiten eine höhere Festigkeit besitzt, um der mechanischen Beanspruchung durch die Wischplatte 26 während eines Reinigungsvorganges widerstehen zu können. Durch diesen Aufbau des Saugtuches wird weiterhin gewährleistet, daß zum einen eine schonende und fusselfreie Behandlung der zu reinigenden Fläche - und zum anderen eine gute Saugfähigkeit erreicht wird.

Die Öffnung 35 des Einlegeschachtes 30 wird von einem Schiebedeckel 41 abgedeckt, der auf seitlichen Führungsstegen 40 der Aufnahmevorrichtung 1 verschiebbar gelagert ist. Dieser Schiebedeckel 41 weist an seinem in Richtung auf die Wischplatte 26 weisenden Ende eine Verlängerung 42 auf, die mit der Basiswand 36 des Aufnahmeschachtes 22 einen Führungsspalt 43 für das Saugtuch 27 bildet.

In der Verlängerung 42 des Schiebedeckels 41 ist eine nach außen konvex ausgebildete fedrige Zone 44 angeformt, die an ihrer Außenseite mit Griffrippen 48 versehen ist. An der Innenseite 45 weist die fedrige Zone 44 Transportzähne 46 auf, die für den Vorschub des Saugtuches 27 dienen. Diesen Transportzähnen 46 stehen in dem Führungsspalt 43 Rückhaltezähne 47 gegenüber, die an der Basiswand 36 angeformt sind. Die fedrige Zone 44 erstreckt sich in der Längsrichtung des Schiebedeckels 41, ist seitlich freigestochen und in Längsrichtung über stauchbare Biegezonen 49 mit demselben verbunden.

Der Schiebedeckel 41 weist an seiner zum freien Ende 28 der Aufnahmevorrichtung 1 hinweisenden Verlängerung 42 eine Stirnfläche 50 auf, die zu einer Abrißkante 51 für das Saugtuch 27 ausgeformt ist. Diese Abrißkante 51 besteht vorzugsweise aus einer Vielzahl von scharfen Zähnen 62 (siehe hierzu Figur 3).

In dem Bereich zwischen der Abrißkante 51 des Schiebedeckels 41 und der Wischplatte 26 ist an der Basiswand 36 des Aufnahmeschachtes 22 eine erhabene Führungsschräge 52 vorgesehen, die dafür Sorge trägt, daß das Saugtuch 27 bei seinem Vorschub sicher über die Wischplatte 26 hinweggeführt wird.

Diese Führungsschräge 52 dient mit ihrem Scheitel 63 gleichzeitig als eine Stütze für eine abnehmbare Haube 55 in der einen Richtung, die sowohl den Wischkopf 3 und die Wischplatte 26 als auch den Aufnahmeschacht 22 mit dem Flüssigkeitsspender 5 abdeckt. Wie die Figur la zeigt, weist die Haube 55 in ihren Seitenflächen 64 innenliegende Führungsvertiefungen 65 auf, in die Nocken 66 eingreifen, die an den Außenflächen der freien Schenkel 23 des Aufnahmeschachtes 22 angeformt sind.

Der Wischkopf 3 und die Wischplatte 26 können eine runde Form aufweisen (siehe Figur 6). Für besondere Anwendungen, z.B. für moderne, dem Modetrend angepaßte Brillen, die teilweise relativ spitz ausgeformte Gläser haben, können der Wischkopf 3 und die Wischplatte 26 auch eine Form gemäß der Figur 7 aufweisen, die in einem Teilbereich 53 rund ist und im weiteren über konvex verlaufende Kurven 54 eine abgerundete Spitze 54a bildet.

Die insgesamt eine Handhabe zum Reinigen von insbesondere optischen Gläsern bildende Vorrichtung wird nach dem Entfernen der Haube 55 mit dem schräg nach unten weisenden Wischkopf 3 auf das Glas aufgesetzt, der sich durch seinen elastischen Befestigungszapfen 10 an die Lage der Glasfläche anpaßt. Das durch die mittelbare Verbindung mit dem Flüssigvorrat des Flüssigkeitsspenders 5 in Verbindung stehende Wischtuch 13 gibt sofort Flüssigkeit an die Fläche ab, was durch seitliches, manuelles Drücken auf die fedrigen Schenkel 23 und somit auch auf den Flüssigkeitsspender 5 verstärkt werden kann. Durch leichtes Reiben wird auch fettender Schmutz vollkommen in der Reinigungsflüssigkeit gelöst, was zur Folge hat, daß derselbe, nach Abheben des Wischkopfes, in dem auf der Glasfläche zurückbleibenden starken Flüssigkeitsfilms aufschwimmt.

Das Saugtuch 27 wird dadurch in seine Funktionslage über der Wischplatte 26 vorgeschoben, indem zunächst der Schiebedeckel 41 manuell zurückgezogen wird, ohne dabei die fedrige Zone 44 nach unten durchzudrücken, soweit, bis derselbe mit einem Rastnocken 67 an der rechten Innenkante 68 des Einlegeschachtes 30 anstößt. Nachfolgend wird der Schiebedeckel 41 bei durchgedrückter elastischer Zone 44 wieder vorgeschoben, wodurch das Saugtuch 27 über die Führungsschräge 52 hinweggeschoben wird und in die Funktionslage gelangt. Dieses kann notfalls durch Wiederholung des Transportvorganges für einen ausreichenden Vorschubweg geschehen. Nachfolgend wird die gesamte Handhabe so verdreht, daß das Saugtuch 27 auf der Glasfläche aufliegt und zwischen dieser und der Wischplatte 26 eingeschlossen ist. Durch nachfolgende Wischbewegungen wird die gesamte Glasfläche überfahren, wodurch der Flüssigkeitsfilm von derselben restlos abgehoben wird. Dieses erfolgt, wie auch bei dem vorhergehenden Aufbringen der Reinigungsflüssigkeit durch den Wischkopf bis in die äußersten Ecken eines Brillenrahmens hinein, da die Köpfe entsprechend ausgeformt sind und hierfür Außenränder mit dem Wischtuch bzw. dem Saugtuch bereitstellen. Nach dem Reinigungsvorgang kann der verbrauchte Bereich des Saugtuches an der Abrißkante 51 abgerissen werden.

Für ein Nachfüllen des Flüssigkeitsspenders 5 wird derselbe über Griffrippen 69 aus dem Aufnahmeschacht 22 herausgezogen und kann nach Öffnen des Nachfüllverschlusses 6 durch einen Nachfüllvorrat, der aus einer hier nicht dargestellten und mit einem rohrförmigen Spender versehenen komprimierbaren Flasche besteht, aufgefüllt werden.

Zum Ergänzen des Saugtuchvorrates (Rolle 27a) wird der Schiebedeckel 41 unter Überwindung der Rastung (67;68) ganz von der Aufnahmevorrichtung nach rechts (ausgehend von Fig.1) abgezogen, wodurch der Einlegeschacht 30 für das Einlegen einer neuen Rolle 27a freiliegt. Nach dem manuellen Auflegen des freien Anfangsbereiches des neuen Saugtuches 27 auf die Rückhaltezähne 47 der Basiswand 36 wird der Schiebedeckel 41 wieder aufgeschoben, wodurch die gesamte Vorrichtung wieder betriebsbereit ist. Wie die Darstellung der Figur 1 leicht erkennen läßt, ist der Schiebedeckel 41 mit seiner Abrißkante 51 über die dargestellte Lage (durch Haube 55 abgedeckte Transportlage) hinaus nach links verschiebbar, und zwar bis zur erhabenen Führungsschräge 52, was das Abreißen des Saugtuches 27 erleichtern kann, aber auch Saugtuch einspart.

Die in den Zeichnungen dargestellte und in der Beschreibung erläuterte Vorrichtung stellt ein Ausführungsbeispiel der Erfindung dar. Es sind andere konstruktive Ausführungen ohne weiteres möglich, die unter die Definition von Anspruch 1 fallen. Solche Ausführungen können z.B. auch eine Einklemmvorrichtung für das freie, über die Wischplatte 26 hinweggeführte Ende des Saugtuches 27 enthalten. Versuche haben allerdings ergeben, daß die Vorrichtung auch ohne ein solches Arretiermittel gut funktionsfähig ist.

### Liste der in den Ansprüchen verwendeten Positionsbezeichnungen

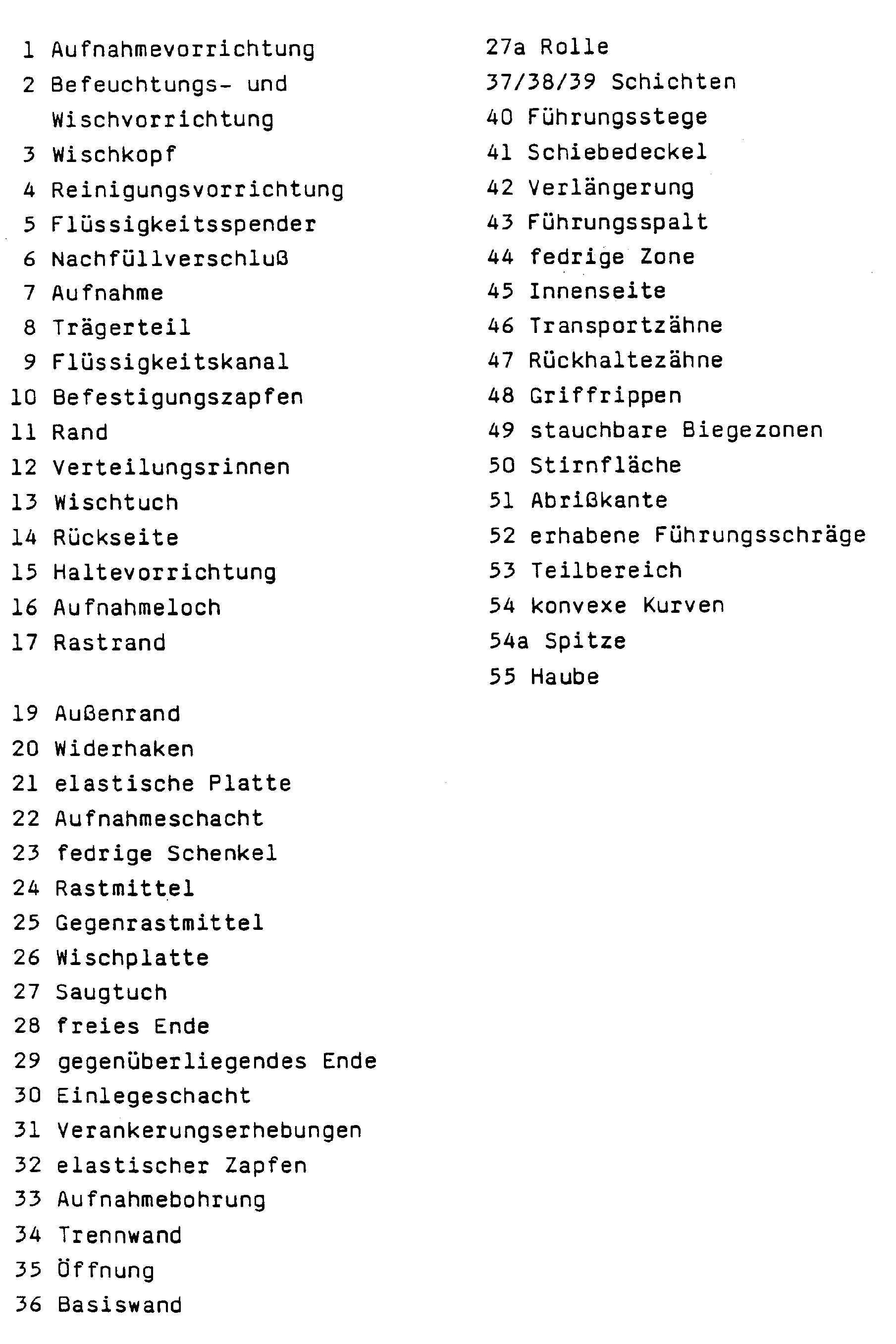

### Liste der in der Beschreibung zusätzlich verwendeten Positionsbezeichnungen

- 56: Seitenwände
- 57: Filmscharnier
- 58: Deckelteil
- 59: Hohlraum
- 60: Ränder
- 61: Außenrand der Wischplatte
- 62: Zähne
- 63: Scheitel
- 64: Seitenflächen
- 65: Führungsvertiefungen
- 66: Nocken
- 67: Rastnocken
- 68: rechte Innenkante
- 69: Griffrippen

## Patentansprüche

1. Handgerät zum Reinigen einer Oberfläche von optischen Gläsern, wie Brillengläsern oder Objektiven, unter Zuhilfenahme einer Reinigungsflüssigkeit, wobei die Vorrichtung einerseits aus einer Befeuchtungs- und Wischeinrichtung (2), und andererseits aus einer Reinigungseinrichtung (4) besteht, welche beide in einem gemeinsamen Gehäuse angeordnet sind, welches aus einem langgestreckten im Querschnitt im wesentlichen rechteckigen und an einem Ende offenen Aufnahmeteil (1) besteht und quer zur Längsachse mit einer Trennwand (34) in einen Einlegeschacht (30) und einen Aufnahmeschacht (22) an der Seite des offenen Endes geteilt ist, der an einer Längsseite offen ist, dessen dieser offenen Längsseite gegenüberliegende Seite als Basiswand (36) ausgebildet ist, und dessen beide andere einander gegenüberliegende Längsseiten als federnde Schenkel (23) ausgebildet sind, und in dem als Befeuchtungs- und Wischeinrichtung (2) ein Flüssigkeitsspender (5) in Form eines Behälters und einem daran befindlichen Wischkopf (3), mit dem Reinigungsflüssigkeit aus dem Behälter auf die zu reinigende Oberfläche aufgebracht werden kann, so eingesetzt und mit Rastmitteln (24) an den Schenkeln (23) und mit Gegenrastmitteln (25) am Flüssigkeitsspender (5) festgehalten ist, daß der Wischkopf (3) aus dem offenen Ende des Aufnahmeschachts (22) herausragt, und wobei die Reinigungseinrichtung (4) aus einer Wischplatte (26) besteht, die am offenen Ende des Aufnahmeschachts (22) an einem Fortsatz der Basiswand angebracht ist, sowie aus einem streifenförmigen Saugtuch (27), das im Einlegeschacht (30) bevorratet ist, aus diesem durch einen Führungsspalt (43) herausgeführt und an der Außenseite der Basiswand (36) zum offenen Ende des Aufnahmeschachts (22) geführt ist, und im Funktionszustand zwischen der Wischplatte (26) und der zu reinigenden Oberfläche liegt.

2. Vorrichtung nach Anspruch 1, dadurch gekennzeichnet, daß der Flüssigkeitsspender (5) eine komprimierbare Flasche ist, die einerseits mit einem Nachfüllverschluß (6) und andererseits mit einer Aufnahme (7) für den Wischkopf (3) versehen ist.

3. Vorrichtung nach einem der Ansprüche 1 und 2, dadurch gekennzeichnet, daß der Flüssigkeitsspender (5) sich zu seinem die Aufnahme (7) tragenden Ende hin derart in seinen Abmessungen verjüngt, daß er von dem Wischkopf (3) seitlich überragt wird.

4. Vorrichtung nach einem der vorhergehenden Ansprüche, dadurch gekennzeichnet, daß der Wischkopf (3) aus einem im wesentlichen plattenförmig ausgebildeten Trägerteil (8) besteht, das an seiner Rückseite mit einem einen Flüssigkeitskanal (9) aufweisenden Befestigungszapfen (10) und an einer Vorderseite mit zwischen einem Rand (11) des Trägerteiles und der Ausmündung des Flüssigkeitskanals (9) vorzugsweise strahlenförmig verlaufenden Verteilungsrinnen (12) versehen ist, die von einem flüssigkeitstränkbaren Wischtuch (13) abgedeckt sind, das, um den Rand (11) des Wischkopfes (3) herumgelegt, den Wischkopf (3) bedeckt.

5. Vorrichtung nach Anspruch 4, dadurch gekennzeichnet, daß das Wischtuch (13) ein weicher, bürstenartiger Textilstoff ist.

6. Vorrichtung nach Anspruch 5, dadurch gekennzeichnet, daß das Wischtuch (13) ein Samt ist.

7. Vorrichtung nach einem der Ansprüche 4 bis 6, dadurch gekennzeichnet, daß das Wischtuch (13) um den Wischkopf (3) derart herumgelegt ist, daß es an dessen Rückseite (14) durch eine Haltevorrichtung (15) fixierbar ist.

8. Vorrichtung nach Anspruch 7, dadurch gekennzeichnet, daß die Haltevorrichtung (15) eine die Rückseite (14) abdeckende Kappe ist, die ein nach oben hin konisch erweitertes Aufnahmeloch (16) für den Befestigungszapfen (10) aufweist, welches mit einem innenliegenden Rastrand (17) in eine Rastnut (18) des Befestigungszapfens rastend eingreift, daß die Haltevorrichtung (15) an einem dem Trägerteil (8) zugekehrten Bereich ihres Außenrandes (19) mit Widerhaken (20) versehen ist, die in das Wischtuch (13) eingreifen, und daß die Haltevorrichtung (15) derart ausgeformt ist, daß sie im montierten Zustand mit ihrem Außenrand (19) auf der Rückseite (14) des Trägerteiles (8) vorgespannt aufliegt.

9. Vorrichtung nach einem der vorhergehenden Ansprüche, dadurch gekennzeichnet, daß zwischen den Verteilungsrinnen (12) und dem Wischtuch (13) des Wischkopfes (3) eine elastische Platte (21) aus einem Schwammaterial eingelegt ist.

10. Vorrichtung nach einem der vorhergehenden Ansprüche, dadurch gekennzeichnet, daß das Trägerteil (8) des Wischkopfes (3) aus einem Kunststoff besteht, der gegenüber dem Material der Haltevorrichtung (15) eine wesentlich elastisch weichere Konsistenz besitzt.

11. Vorrichtung nach einem der vorhergehenden Ansprüche, dadurch gekennzeichnet, daß der Befestigungszapfen (10) an seinem Ende leicht konisch ausgebildet ist und in die entsprechend ausgeformte Aufnahme (7) des Flüssigkeitsspenders (5) eingepreßt ist.

12. Vorrichtung nach einem der vorhergehenden Ansprüche, dadurch gekennzeichnet, daß die Wischplatte (26) aus einem federelastischen Kunststoff besteht und eine im wesentlichen konkave Fläche aufweist, die mit aufrauhenden Verankerungserhebungen (31) zum Festhalten des an die Fläche anlegbaren Saugtuches (27) versehen ist.

13. Vorrichtung nach einem der vorhergehenden Ansprüche, dadurch gekennzeichnet, daß die Wischplatte (26) mit einem elastischen Zapfen (32) versehen ist, der in eine Aufnahmebohrung (33) des Aufnahmeteiles (1) rastend eingreift.

14. Vorrichtung nach einem der vorhergehenden Ansprüche, dadurch gekennzeichnet, daß der Wischkopf (3) und die Wischplatte (26) an den sie tragenden Teilen, das sind Flüssigkeitsspender 5 bzw. freies Ende 28 des Aufnahmeteiles 1, derart befestigt sind, daß sie sich bei in den Aufnahmeschacht (22) eingesetztem Flüssigkeitsspender (5) an dem gleichen Ende (28) des Aufnahmeteiles (1) befinden, in entgegengesetzte Richtungen abstehen, eine in die Richtung des freien Endes (28) des Aufnahmeteiles (1) weisende Schräglage haben und bezüglich einer in der Längsrichtung des Aufnahmeteiles (1) verlaufenden gedachten Linie zueinander eine symmetrische Lage einnehmen.

15. Vorrichtung nach einem der vorhergehenden Ansprüche, dadurch gekennzeichnet, daß sich der Einlegeschacht (30) für das Saugtuch (27) hinter der Trennwand (34) an den Aufnahmeschacht (22) anschließt und eine im wesentlichen zur Wischplatte (26) weisende Öffnung (35) aufweist, derart, daß das streifenförmige Saugtuch (27) an der Außenseite des Aufnahmeteiles (1) über die Basiswand (36) des Aufnahmeschachtes in Richtung auf die Wischplatte (26) geführt ist.

16. Vorrichtung nach einem der vorhergehenden Ansprüche, dadurch gekennzeichnet, daß der Vorrat des Saugtuches (27) eine Rolle (27a) ist.

17. Vorrichtung nach einem der vorhergehenden Ansprüche, dadurch gekennzeichnet, daß das Saugtuch (27) aus mehreren Schichten (37,38 bzw. 39) besteht.

18. Vorrichtung nach einem der vorhergehenden Ansprüche, dadurch gekennzeichnet, daß die Schichten (37,38 bzw. 39) des Saugtuches (27) aus Papier bestehen, wobei eine zweite und dritte Schicht (38 und 39) gegenüber einer mit der zu reinigenden Fläche in Anlage bringbaren ersten Schicht (37) verstärkt saugfähig sind und die dritte Schicht (39) gegenüber der Festigkeit der zweiten Schicht (38) zusätzlich eine höhere Festigkeit besitzt.

19. Vorrichtung nach einem der vorhergehenden Ansprüche, dadurch gekennzeichnet, daß der Einlegeschacht (30) durch einen auf Führungsstegen (40) des Aufnahmeteiles (1) laufenden Schiebedeckel (41) abgedeckt ist, der mit einer in Richtung auf die Wischplatte (26) weisenden Verlängerung (42) mit der Außenseite der Basiswand (36) des Aufnahmeschachtes (22) einen Führungsspalt (43) für das Saugtuch (27) bildet.

20. Vorrichtung nach einem der vorhergehenden Ansprüche, dadurch gekennzeichnet, daß in der Verlängerung (42) des Schiebedeckels (41) eine nach außen konvex ausgebildete federelastische Zone (44) eingeformt ist, an deren Innenseite (45) Transportzähne (46) für das Saugtuch (27) vorgesehen sind, die mit an der Basiswand (36) angeformten Rückhaltezähnen (47) korrespondieren, und daß die Außenseite der federelastischen Zone (44) Griffrippen (48) aufweist.

21. Vorrichtung nach einem der vorhergehenden Ansprüche, dadurch gekennzeichnet, daß die federelastische Zone (44) sich in der Längsrichtung des Schiebedeckels (41) erstreckt, seitlich mit dem Schiebedeckel (41) nicht verbunden ist und an ihren beiden Enden über balgartig verformbare Biegezonen (49) mit dem Schiebedeckel (41) verbunden ist.

22. Vorrichtung nach einem der vorhergehenden Ansprüche, dadurch gekennzeichnet, daß an der zum freien Ende (28) des Aufnahmeteiles (1) hinweisenden Stirnfläche (50) des Schiebedeckels (41) eine aus Zähnen gebildete Abrißkante (51) angeformt ist.

23. Vorrichtung nach einem der vorhergehenden Ansprüche, dadurch gekennzeichnet, daß in dem Bereich der Basiswand (36) des Aufnahmeschachtes (22), der zwischen der Abrißkante (51) und der Wischplatte (26) lokalisiert ist, eine erhabene Führungsschräge (52) vorgesehen ist.

24. Vorrichtung nach einem der vorhergehenden Ansprüche, dadurch gekennzeichnet, daß der Wischkopf (3) und die Wischplatte (26) eine runde Form aufweisen.

25. Vorrichtung nach einem der vorhergehenden Ansprüche, dadurch gekennzeichnet, daß die Formen von Wischkopf (3a) und Wischplatte (26a) in einem ersten Teilbereich (53) rund sind und in dem verbleibenden zweiten Teilbereich mittels konvexer Kurven (54) zu einer abgerundeten und verlängerten Spitze (54a) ausgebildet sind.

26. Vorrichtung nach einem der vorhergehenden Ansprüche, gekennzeichnet durch eine Haube (55), die sowohl den Wischkopf (3) und die Wischplatte (26) als auch den Aufnahmeschacht (22) mit dem Flüssigkeitsspender (5) abdeckt.

27. Vorrichtung nach einem der vorhergehenden Ansprüche, dadurch gekennzeichnet, daß das streifenförmige Saugtuch (27) breiter ausgebildet ist als die Wischplatte (26) im Durchmesser bemessen ist.

## Claims

1. A hand-held device for cleaning a surface of optical glasses, for example glasses in spectacles, or lenses, using a cleaning liquid, the device comprising a moistening and wiping device (2) and a cleaning device (4), which are both arranged in a common housing which comprises a receiving part (1) extending longitudinally, substantially rectangular in cross-section and open at one end, and divided transversely to the longitudinal axis, by means of a dividing wall (34), into an insertion shaft (30) and a receiving shaft (22) on the side of the open end, the said receiving shaft being open at one longitudinal side, the side opposite the said open longitudinal side being formed as a base wall (36), and both the other opposed longitudinal sides being formed as resilient limbs (23), and as a moistening and wiping device (2), a liquid dispenser (5) in the form of a container and a wiping head (3) positioned thereon - by means of which head cleaning liquid from the container can be applied on to the surface for cleaning - are inserted in the said receiving shaft and retained via catch means (24) on the limbs (23) and via opposite catch means (25) on the liquid dispenser (5), in such a manner that the wiping head (3) projects out of the open end of the receiving shaft (22), and the cleaning device (4) comprises a wiping plate (26) attached to a projection of the base wall at the open end of the receiving shaft (22), and also comprises a strip-shaped absorbent cloth (27) which is stored in the insertion shaft (30), is guided out of the same through a guide gap (43) and is guided over the outer surface of the base wall (36) to the open end of the receiving shaft (22), and when in an operational state is positioned between the wiping plate (26) and the surface for cleaning.

2. A device in accordance with claim 1, **characterised in that** the liquid dispenser (5) is a compressible bottle, which is provided on the one hand with a refill seal (6) and on the other hand with a receiving member (7) for the wiping head (3).

3. A device in accordance with one of claims 1 and 2, **characterised in that** the liquid dispenser (5) tapers towards its end having the receiving member (7) in such a manner that the wiping head (3) projects laterally beyond it.

4. A device in accordance with one of the preceding claims, **characterised in that** the wiping head (3) comprises a substantially plate-shaped supporting part (8), provided on its rear surface with a securing pin (10) having a channel (9) for liquid, and provided on a front surface with distribution grooves (12) extending, preferably in a ray-shaped manner, between an edge (11) of the supporting part and the opening of the liquid channel (9), the said grooves being covered by a wiping cloth (13) which can be saturated with liquid and which, wrapped around the edge (11) of the wiping head (3), covers the wiping head (3).

5. A device in accordance with claim 4, **characterised in that** the wiping cloth (13) is a soft, brush-like textile material.

6. A device in accordance with claim 5, **characterised in that** the wiping cloth (13) is a piece of velvet.

7. A device in accordance with one of claims 4 to 6, **characterised in that** the wiping cloth (13) is arranged around the wiping head (3) in such a manner that it can be secured at the rear side (14) of the head by means of a retaining device (15).

8. A device in accordance with claim 7, **characterised in that** the retaining device (15) is a cap covering the rear surface (14), having a receiving aperture (16) broadening conically upwards for the securing pin (10), and engaging in a locking manner via an internal catch edge (17) into a catch groove (18) in the securing pin, and the retaining device (15) is provided with barbs (20) on a region of its outer edge (19) facing the supporting part (8), and the barbs engage in the wiping cloth (13), and the retaining device (15) is formed in such a way that in assembled state its outer edge (19) rests with prestressing against the rear surface (14) of the supporting part (8).

9. A device in accordance with one of the preceding claims, **characterised in that** a resilient plate (21) made of sponge material is inserted between the distributing grooves (12) and the wiping cloth (13) on the wiping head (3).

10. A device in accordance with one of the preceding claims, **characterised in that** the supporting part (8) of the wiping head (3) is made of a plastic which has a substantially elastically softer consistency than the material of the retaining device (15).

11. A device in accordance with one of the preceding claims, **characterised in that** the securing pin (10) is slightly conical at its end, and is pressed into the correspondingly formed receiving member (7) in the liquid dispenser (5).

12. A device in accordance with one of the preceding claims, **characterised in that** the wiping plate (26) is made from a spring-resilient plastic and has a substantially concave surface which is provided with roughened securing elevations (31) to retain the absorbent cloth (27) which can be placed on the surface.

13. A device in accordance with one of the preceding claims, **characterised in that** the wiping plate (26) is provided with a resilient pin (32) which engages in a locking manner in a receiving bore (33) in the receiving part (1).

14. A device in accordance with one of the preceding claims, **characterised in that** the wiping head (3) and the wiping plate (26) are secured on to the parts supporting them, namely the liquid dispenser (5) or the free end (28) of the receiving part (1) in such a manner that when the liquid dispenser (5) is inserted in the receiving shaft (22), they are positioned at the same end (28) of the receiving part (1) and project in opposite directions, and have an oblique position in the direction of the free end (28) of the receiving part (1), and adopt a mutually symmetrical position in relation to a notional line extending in the longitudinal direction of the receiving part (1).

15. A device in accordance with one of the preceding claims, **characterised in that** the insertion shaft (30) for the absorbent cloth (27) adjoins the receiving shaft (22) behind the dividing wall (34), and has an opening (35) pointing substantially towards the wiping plate (26) in such a manner that the strip-shaped absorbent cloth (27) on the outer surface of the receiving part (1) is guided over the base wall (36) of the receiving shaft, in the direction of the wiping plate (26).

16. A device in accordance with one of the preceding claims, **characterised in that** the means of supply of the absorbent cloth (27) is a roller (27a).

17. A device in accordance with one of the preceding claims, **characterised in that** the absorbent cloth (27) comprises a plurality of layers (37, 38 and 39).

18. A device in accordance with one of the preceding claims, **characterised in that** the layers (37, 38 and 39) of the absorbent cloth (27) consist of paper, a second and third layer (38 and 39) having an increased capacity for absorption in relation to a first layer (37) which can be brought into contact with the surface for cleaning, and the third layer (39) also has a higher degree of strength in relation to that of the second layer (38).

19. A device in accordance with one of the preceding claims, **characterised in that** the insertion shaft (30) is covered by a sliding lid (41) running on guide bars (40) in the receiving part (1), and, by means of an extension (42) pointing in the direction of the wiping plate (26), the said lid and the outer surface of the base wall (36) of the receiving shaft (22) together form a guide gap (43) for the absorbent cloth (27).

20. A device in accordance with one of the preceding claims, **characterised in that** a resilient region (44), shaped to be convex towards the outside, is formed in the extension (42) of the sliding lid (41), and on the inner surface (45) of the said region, conveying teeth (46) are provided for the absorbent cloth (27), and correspond to retaining teeth (47) formed on the base wall (36), and the outer surface of the resilient region (44) has gripping ribs (48).

21. A device in accordance with one of the preceding claims, **characterised in that** the resilient region (44) extends in the longitudinal direction of the sliding lid (41), and is not connected laterally to the sliding lid (41), yet is connected at both ends to the sliding lid (41) via deformable bellows-like bending regions (49).

22. A device in accordance with one of the preceding claims, **characterised in that** a tear-off edge (51), formed by means of teeth, is provided on the end surface (50) of the sliding lid (41), pointing towards the free end (28) of the receiving part (1).

23. A device in accordance with one of the preceding claims, **characterised in that** a raised guide slope (52) is provided in that region of the base wall (36) of the receiving shaft (22) which is positioned between the tear-off edge (51) and the wiping plate (26).

24. A device in accordance with one of the preceding claims, **characterised in that** the wiping head (3) and the wiping plate (26) are round in shape.

25. A device in accordance with one of the preceding claims, **characterised in that** the shapes of the wiping head (3a) and the wiping plate (26a) are round in a first partial region (53) and in the remaining second partial region are formed by convex curves (54) to produce a rounded and extended point (54a).

26. A device in accordance with one of the preceding claims, **characterised by** a cap (55) which covers both the wiping head (3) and the wiping plate (26), and also the receiving shaft (22) with the liquid dispenser (5).

27. A device in accordance with one of the preceding claims, **characterised in that** the strip-shaped absorbent cloth (27) is formed to be broader than the diameter of the wiping plate (26).

## Revendications

1. Appareil manuel destiné à nettoyer une surface de verres optiques, tels que des verres de lunettes ou des objectifs, à l'aide d'un liquide de nettoyage, le dispositif étant constitué d'une part d'un dispositif de mouillage et d'essuyage (2), et d'autre part d'un dispositif de nettoyage (4), tous deux étant placés dans un boîtier commun qui est constitué d'une partie de logement (1) allongée, de section transversale sensiblement rectangulaire et ouverte à une extrémité, et qui est partagée, transversalement à l'angle longitudinal, par une cloison (34), en un compartiment de rangement (30) et un compartiment de réception (22) sur le côté de l'extrémité ouverte, qui est ouvert sur un grand côté, dont le côté faisant face à ce grand côté ouvert se présente sous la forme d'une paroi de base (36) et dont les deux autres grands côtés, se faisant face, se présentent sous la forme de branches (23) faisant ressort, et dans lequel il est inséré, comme dispositif de mouillage et d'essuyage (2), un distributeur de liquide (5) sous la forme d'un réservoir et d'une tête d'essuyage (3) se trouvant sur celui-ci, permettant d'appliquer un liquide de nettoyage provenant du réservoir sur la surface à nettoyer, et qui est fixé par des moyens d'arrêt (24) des branches (23) et par des contre-moyens d'arrêt (25) du distributeur de liquide (5), de manière que la tête d'essuyage (3) dépasse de l'extrémité ouverte du compartiment de réception (22), et le dispositif de nettoyage (4) étant constitué d'une plaque d'essuyage (26) qui est placée à l'extrémité ouverte du compartiment de réception (22), sur un prolongement de la paroi de base, ainsi que d'un linge absorbant (27) en forme de bande, qui est en réserve dans le compartiment de rangement (30), ressort de celui-ci par une fente de guidage (43) et est guidé sur le côté extérieur de la paroi de base (36) vers l'extrémité ouverte du compartiment de réception (22), et se trouve, à l'état de fonctionnement, entre la plaque d'essuyage (26) et la surface à nettoyer.

2. Dispositif selon la revendication 1, caractérisé en ce que le distributeur de liquide (5) est un flacon compressible qui est pourvu d'une part d'une fermeture de remplissage (6) et d'autre part d'un logement (7) pour la tête d'essuyage (3).

3. Dispositif selon l'une des revendications 1 ou 2, caractérisé en ce que le distributeur de liquide (5) se rétrécit dans ses dimensions vers son extrémité portant le logement (7), de manière qu'il dépasse sur le côté de la tête d'essuyage (3).

4. Dispositif selon l'une des revendications précédentes, caractérisé en ce que la tête d'essuyage (3) est constituée d'un élément de support (8), sensiblement en forme de plaque, qui sur sa face arrière est pourvu d'un tenon de fixation (10), présentant un canal de liquide (9) et, sur sa face avant, de gorges de distribution (12) s'étendant de préférence en forme de rayons, entre un bord (11) de l'élément de support et la sortie du canal de liquide (9), lesquelles gorges sont recouvertes d'un linge d'essuyage (13), pouvant être imprégné de liquide, qui, placé autour du bord (11) de la tête d'essuyage (3), recouvre la tête d'essuyage (3).

5. Dispositif selon la revendication 4, caractérisé en ce que le linge d'essuyage (13) est un textile doux, à la manière d'une brosse.

6. Dispositif selon la revendication 5, caractérisé en ce que le linge d'essuyage (13) est un velours.

7. Dispositif selon l'une des revendications 4 à 6, caractérisé en ce que le linge d'essuyage (13) est placé autour de la tête d'essuyage (3) de manière qu'il soit possible de le fixer sur sa face arrière (14) par un dispositif de retenue (15).

8. Dispositif selon la revendication 7, caractérisé en ce que le dispositif de retenue (15) est un capuchon recouvrant la face arrière (14), qui présente un trou de logement (16) élargi coniquement vers le haut, pour le tenon de fixation (10), qui avec un bord d'encliquetage (17) intérieur s'engage en s'accrochant dans une rainure d'encliquetage (18) du tenon de fixation, en ce que le dispositif de retenue (15) est pourvu, sur une zone tournée vers l'élément de support (8) de son bord extérieur (19), de crochets (20) qui s'engagent dans le linge d'essuyage (13), et en ce que le dispositif de fixation (15) a une forme telle qu'à l'état monté il repose précontraint avec son bord extérieur (19) sur la face arrière (14) de l'élément de support (8).

9. Dispositif selon l'une des revendications précédentes, caractérisé en ce qu'entre les gorges de distribution (12) et le linge d'essuyage (13) de la tête d'essuyage (3), il est placé une plaque (21) élastique dans un matériau d'éponge.

10. Dispositif selon l'une des revendications précédentes, caractérisé en ce que l'élément de support (8) de la tête d'essuyage (3) est réalisé dans une matière plastique qui possède une consistance beaucoup plus souple élastiquement que le matériau du dispositif de retenue (15).

11. Dispositif selon l'une des revendications précédentes, caractérisé en ce que le tenon de fixation (10) est légèrement conique à son extrémité et est pressé à l'intérieur du logement (7) de forme correspondante du distributeur de liquide (5).

12. Dispositif selon l'une des revendications précédentes, caractérisé en ce que la plaque d'essuyage (26) est réalisée dans une matière plastique présentant l'élasticité d'un ressort et présente une surface sensiblement concave, qui est pourvue de reliefs d'ancrage (31) rugueux destinés à fixer le linge absorbant (27) à appliquer contre la surface.

13. Dispositif selon l'une des revendications précédentes, caractérisé en ce que la plaque d'essuyage (26) est pourvue d'un tenon (32) élastique, qui s'engage par accrochage dans un trou de logement (33) de la partie de logement (1).

14. Dispositif selon l'une des revendications précédentes, caractérisé en ce que la tête d'essuyage (3) et la plaque d'essuyage (26) sont fixées sur les parties qui les portent, c'est-à-dire le distributeur de liquide (5) ou l'extrémité libre (28) de la partie de logement (1), de manière à se trouver, lorsque le distributeur de liquide (5) est inséré dans le compartiment de réception (22), à la même extrémité (28) de la partie de logement (1), de manière à dépasser dans des sens opposés, à avoir une position oblique dirigée vers l'extrémité libre (28) de la partie de logement (1) et de manière à prendre une position symétrique l'une par rapport à l'autre, par rapport à une ligne imaginaire s'étendant dans la direction longitudinale de la partie de logement (1).

15. Dispositif selon l'une des revendications précédentes, caractérisé en ce que le compartiment de rangement (30) pour le linge absorbant (27) fait suite, derrière la cloison (34), au compartiment de réception (22) et présente une ouverture (35), dirigée essentiellement vers la plaque d'essuyage (26), de manière que le linge absorbant (27) en forme de bande soit guidé contre le côté extérieur de la partie de logement (1), sur la paroi de base (36) du compartiment de réception, en direction de la plaque d'essuyage (26).

16. Dispositif selon l'une des revendications précédentes, caractérisé en ce que la réserve de linge absorbant (27) est un rouleau (27a).

17. Dispositif selon l'une des revendications précédentes, caractérisé en ce que le linge absorbant (27) est constitué de plusieurs couches (37, 38 ou 39).

18. Dispositif selon l'une des revendications précédentes, caractérisé en ce que les couches (37, 38 ou 39) du linge absorbant (27) sont en papier, une deuxième et une troisième couches (38 et 39) étant plus absorbantes qu'une première couche (37) venant en application avec la surface à nettoyer et la troisième couche (39) présentant une résistance accrue par rapport à celle de la deuxième couche (38).

19. Dispositif selon l'une des revendications précédentes, caractérisé en ce que le compartiment de rangement (30) est recouvert par un couvercle coulissant (41), passant sur des nervures de guidage (40) de la partie de logement (1), lequel couvercle forme avec un prolongement (42), dirigé vers la plaque d'essuyage (26), avec le côté extérieur de la paroi de base (36) du compartiment de réception (22), une fente de guidage (43) pour le linge absorbant (27).

20. Dispositif selon l'une des revendications précédentes, caractérisé en ce que dans le prolongement (42) du couvercle coulissant (41) il est formé une zone (44), présentant l'élasticité d'un ressort, convexe vers l'extérieur, sur le côté intérieur (45) de laquelle sont prévues des dents de transport (46) pour le linge absorbant (27), qui correspondent à des dents de retenue (47), formées sur la paroi de base (36), et en ce que le côté extérieur de la zone (44) élastique présente des nervures de prise (48).

21. Dispositif selon l'une des revendications précédentes, caractérisé en ce que la zone (44) élastique s'étend dans la direction longitudinale du couvercle coulissant (41), n'est pas reliée sur le côté avec le couvercle coulissant (41) et est reliée à ses deux extrémités avec le couvercle coulissant (41), par des zones pliées (49) déformables à la manière d'un soufflet.

22. Dispositif selon l'une des revendications précédentes, caractérisé en ce que sur la face frontale (50) du couvercle coulissant (41), tournée vers l'extrémité libre (28) de la partie de logement (1), il est formé un bord d'arrachage (51) formé de dents.

23. Dispositif selon l'une des revendications précédentes, caractérisé en ce que dans la zone de la paroi de base (36) du compartiment de réception (22), qui est localisée entre le bord d'arrachage (51) et la plaque d'essuyage (26), il est prévu une surface oblique de guidage (52) en relief.

24. Dispositif selon l'une des revendications précédentes, caractérisé en ce que la tête d'essuyage (3) et la plaque d'essuyage (26) ont une forme ronde.

25. Dispositif selon l'une des revendications précédentes, caractérisé en ce que les formes de la tête d'essuyage (3a) et de la plaque d'essuyage (26a) sont rondes dans une première zone partielle (53) et ont la forme d'une pointe (54a) arrondie et prolongée, dans la deuxième zone partielle restante, grâce à des courbes (54) convexes.

26. Dispositif selon l'une des revendications précédentes, caractérisé par un capot (55) qui recouvre la tête d'essuyage (3) et la plaque d'essuyage (26) ainsi que le compartiment de réception (22) avec le distributeur de liquide (5).

27. Dispositif selon l'une des revendications précédentes, caractérisé en ce que le linge absorbant (27) en forme de bande est plus large que le diamètre de la plaque d'essuyage (26).
